# EUROPÄISCHE PATENTSCHRIFT

(11) **EP 1 552 128 B1**
(45) Veröffentlichungstag und Bekanntmachung des Hinweises auf die Patenterteilung: **24.02.2010**
(21) Anmeldenummer: 03807729.3
(22) Anmeldetag: 27.05.2003
(51) Int. Cl.: F02D 41/22

(54) **VERFAHREN, STEUERUNGSGER T UND COMPUTER-PROGRAMM ZUR DETEKTION FEHLERHAFTER DRUCKSENSOREN BEI EINER BRENNKRAFTMASCHINE**
METHOD, CONTROL APPLIANCE AND COMPUTER PROGRAM FOR DETECTING DEFECTIVE PRESSURE SENSORS IN AN INTERNAL COMBUSTION ENGINE
PROCEDE, APPAREIL DE COMMANDE, ET PROGRAMME INFORMATIQUE POUR DETECTER DES DETECTEURS DE PRESSION DEFECTUEUX DANS UN MOTEUR A COMBUSTION INTERNE

(30) Priorität: 04.10.2002 DE 10246320
(43) Veröffentlichungstag der Anmeldung: 13.07.2005
(73) Patentinhaber: ROBERT BOSCH GMBH, 70442 Stuttgart (DE)
(72) Erfinder: MONINGER, Thomas, 73054 Eislingen (DE)
(86) Internationale Anmeldenummer: PCT/DE2003/001717
(87) Internationale Veröffentlichungsnummer: WO 2004/033882

(56) Entgegenhaltungen:
- EP-A- 1 245 812
- DE-A- 19 946 874
- DE-C- 10 021 639
- US-B1- 6 329 807

## Beschreibung

### Stand der Technik

Die Erfindung betrifft ein Verfahren, ein Steuerungsgerät und ein Computer-Programm zur Detektion eines fehlerhaften Saugrohrdrucksensors und/oder eines fehlerhaften Umgebungsdrucksensors bei einer Brennkraftmaschine.

Ein Saugrohrdrucksensor dient z.B. zur Diagnose der Abgasrückführung bei einer Brennkraftmaschine und liefert damit wichtige Informationen für ein Steuerungsgerät zur Ansteuerung der Brennkraftmaschine. Aus dem Druck im Saugrohr kann ein Lastsignal, welches die aktuelle Last der Brennkraftmaschine repräsentiert, oder die Einstellung eines korrekten Fahrervorgabemomentes abgeleitet werden. Aus dem Lastsignal kann weiterhin eine optimale Einspritzzeit bei einer Brennkraftmaschine mit Drosselregelung ermittelt werden.

Aufgrund der beschriebenen großen Bedeutung, die dem Saugrohrdrucksensor beim Betrieb einer Brennkraftmaschine zukommt, ist eine frühzeitige Diagnose von Fehlern bei dem Saugrohrdrucksensor wünschenswert.

Aus dem Stand der Technik sind bereits Diagnoseverfahren zur Erkennung der Fehlerhaftigkeit von Saugrohrdrucksensoren, allerdings nur bei konventionellen Brennkraftmaschinen, insbesondere Ottomotoren, bekannt. Die konventionellen Brennkraftmaschinen zeichnen sich dadurch aus, dass bei ihnen die Laststeuerung über die Drosselklappe erfolgt, wobei ein starrer Zusammenhang zwischen dem Druck im Saugrohr und der Last bzw. zwischen dem Drosselklappenwinkel und der Last besteht.

Ein Beispiel für ein solches Diagnoseverfahren für konventionelle Ottomotoren ist z.B. aus der DE 199 46 874 A1 bekannt. Zunächst werden dort aus unterschiedlichen Betriebsparametern drei verschiedene Lastsignale L1, L2 und L3 gebildet, wobei L1 die Luftmasse repräsentiert, die in ein Saugrohr des Ottomotors strömt, L2 den Druck im Saugrohr repräsentiert und L3 ein aus der Kraftstoffmasse ermitteltes Kraftstoffsignal repräsentiert. Diese Lastsignale werden paarweise miteinander verglichen und bei auftretenden Abweichungen zu Kombinationen zusammengefasst. Unterschiedlichen Kombinationen von Abweichungen werden unterschiedliche Ursachen, d.h. unterschiedliche Fehlerquellen, für die Abweichungen zugeordnet. So kann beispielsweise in einem ersten Teil des Verfahrens bei Vorliegen einer bestimmten Abweichung zunächst darauf geschlossen werden, dass entweder der Saugrohrdrucksensor und/oder das Abgasrückführventil defekt ist. In einem weiteren Teil des Verfahrens kann dann genauer bestimmt werden, ob der Saugrohrdrucksensor oder das Abgasventil defekt ist. Dazu wird der Druck im Saugrohr sowohl während des Betriebs des Motors wie auch während dessen Stillstandes im Nachlauf des zugehörigen Motorsteuergerätes gemessen und ausgewertet. Ist der Saugrohrdruck in beiden Fällen gleich groß, dann lässt das auf einen Defekt im Saugrohrdrucksensors schließen; ist dagegen der Druck im Saugrohr bei Stillstand kleiner als bei Betrieb des Motors, so lässt das auf ein defektes Abgasrückführventil schließen.

Weiterhin sind im Stand der Technik wie EP 1 245 812 Umgebungsdrucksensoren zur Anwendung bei Brennkraftmaschinen bekannt. Neben den Saugrohrdrucksensoren liefern auch sie wichtige Informationen für ein Steuerungsgerät zur Ansteuerung einer Brennkraftmaschine. Umgebungsdrucksensoren dienen u.a. zur Ermittlung des maximalen Drehmoments der Brennkraftmaschine. Auch für Umgebungsdrucksensoren sind Diagnoseverfahren im Stand der Technik bekannt. Ein Umgebungsdrucksensor kann bei konventionellen Brennkraftmaschinen, bei denen eine Laststeuerung über die Drosselklappe erfolgt, aber nur beim Start oder bei Volllast auf seine korrekte Funktionsweise hin überprüft, d.h. plausibilisiert, werden, da bei konventionellen Brennkraftmaschinen nur in diesen Zuständen im Saugrohr annähernd Umgebungsdruck vorliegt.

Bei Brennkraftmaschinen mit variabler Ventilsteuerung, d.h. bei Brennkraftmaschinen mit drosselfreier Laststeuerung, wird dagegen die Last der Brennkraftmaschine nicht mehr über die Drosselklappe und damit den Druck im Saugrohr, sondern über eine Veränderung ihrer Ventilsteuerzeiten und/oder ihres Ventilhubes gesteuert. Gegenüber konventionellen Brennkraftmaschinen zeichnen sich die Brennkraftmaschinen mit vollvariabler Ventilsteuerung durch einen verringerten Spritverbrauch aus.

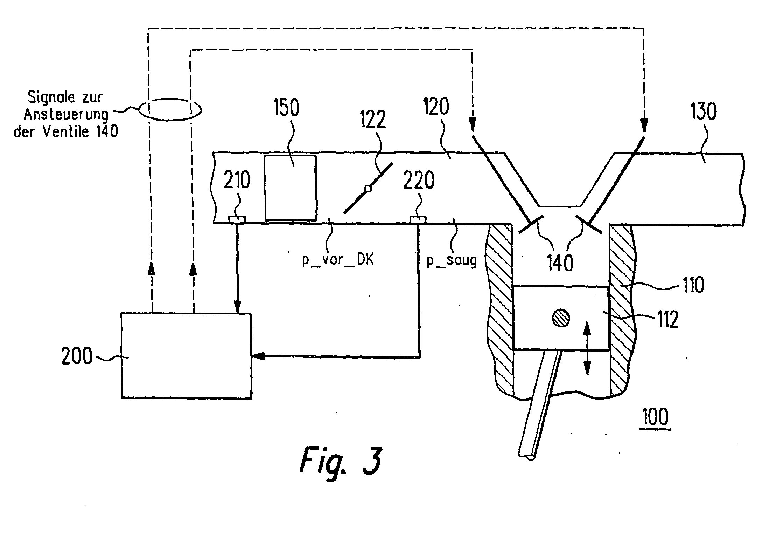

Fig. 3 veranschaulicht schematisch eine derartige Brennkraftmaschine 100 mit variabler Ventilsteuerung. Die Brennkraftmaschine 100 umfaßt einen Motorblock 110 mit einem Kolben 112, der sich darin auf und ab bewegt. An den Motorblock angeschlossen ist ein Saugrohr 120 mit eingebauter Drosselklappe 122 und ein Abgasrohr 130. Die Drosselklappe 122 dient bei derartigen Brennkraftmaschinen allerdings im Unterschied zu konventionellen Ottomotoren nicht zur Lastregelung. Die Regelung der Luftzufuhr und - abfuhr durch das Saugrohr und das Abgasrohr und damit die Regelung der Last der Brennkraftmaschine erfolgt über Ventile 140, die von einem Steuerungsgerät 200 angesteuert werden, wobei die Ansteuerung mit vollvariablen Steuerkanten erfolgt. Statt eines einzelnen Steuerungsgerätes 200 können zur Ansteuerung der Ventile 140 auch mehrere Steuerungsgeräte eingesetzt werden, die über eine beliebige Kommunikationsverbindung miteinander verbunden sind. Die Bewegung der Ventile erfolgt z.B. über elektromagnetische oder elektrohydraulische Aktoren.

Das Steuerungsgerät 200 umfasst einen Umgebungsdrucksensor 210 zum Bereitstellen eines Drosselklappendrucksignals, welches den Druck p_vor_DK vor der Drosselklappe 122 repräsentiert. Dabei stellt der Umgebungsdrucksensor 210 den Druck p_vor_DK nicht direkt bereit, sondern er stellt primär nur den Umgebungsdruck, d.h. den Luftdruck vor einem Luftfilter 150 der Brennkraftmaschine bereit. Aus dem gemessenen Umgebungsdruck kann dann nachfolgend entweder im Umgebungsdrucksensor 210 selbst oder im Steuerungsgerät 200 der tatsächliche Druck vor der Drosselklappe p_vor_DK abgeleitet werden, indem ein in dem Luftfilter 150 der Brennkraftmaschine auftretender Druckabfall von dem gemessenen Umgebungsdruck subtrahiert wird.

Bei drosselfreiem Betrieb der Brennkraftmaschine muss der Druck vor der Drosselklappe gleich dem Druck im Saugrohr sein. Bei den Steuerungsgeräten im Stand der Technik ist typischerweise ein Saugrohrdrucksensor 220 vorgesehen. Der Saugrohrdrucksensor 220 stellt ein Saugrohrdrucksignal zur Verfügung, welches den Druck p_saug in dem Saugrohr 120 der Brennkraftmaschine 100 repräsentiert. Manchmal verfügen sie zusätzlich über einen Umgebungsdrucksensor 210.

Weil jedoch, wie soeben erläutert, bei Brennkraftmaschinen mit vollvariabler Ventilsteuerung die Lastregelung nicht mehr über die Drosselklappe erfolgt, sind alle bisher bekannten Diagnoseverfahren für Drucksensoren, die darauf basieren, ein die Last der Brennkraftmaschine repräsentierendes Lastsignal aus der Winkelstellung der Drosselklappe oder dem Druck im Saugrohr abzuleiten, für Brennkraftmaschinen mit vollvariabler Ventilsteuerung nicht mehr anwendbar.

Ausgehend von dem genannten Stand der Technik ist es deshalb die Aufgabe der Erfindung, ein bekanntes Verfahren, ein bekanntes Steuerungsgerät und ein bekanntes Computerprogramm zur Detektion eines fehlerhaften Saugrohrdrucksensors und/oder eines fehlerhaften Umgebungsdrucksensors bei einer konventionellen Brennkraftmaschine derart weiterzubilden, dass diese Detektion auch bei Brennkraftmaschinen mit vollvariabler Ventilsteuerung möglich ist.

Diese Aufgabe wird durch das in Patentanspruch 1 beanspruchte Verfahren gelöst. Im Unterschied zum Stand der Technik verzichtet das beanspruchte Verfahren auf die Ableitung von Lastsignalen aus der Stellung der Drosselklappe oder aus dem Saugrohrdruck zur Detektion, ob mindestens einer von zwei Drucksensoren, nämlich der Saugrohrdrucksensor oder der Umgebungsdrucksensor defekt ist. Stattdessen ermöglicht das erfindungsgemäße Verfahren diese Detektion ausschließlich aufgrund einer direkten Auswertung des Druckes vor der Drosselklappe und des Druckes im Saugrohr.

Gemäß einer bevorzugten vorteilhaften Weiterbildung umfasst das beanspruchte Verfahren weitere Schritte, um genau festzustellen zu können, welcher der beiden Drucksensoren defekt ist. Dazu wird die Brennkraftmaschine mit drosselfreier Laststeuerung künstlich in einen Betriebszustand versetzt, der eine gedrosselte Laststeuerung simuliert. Im Rahmen dieser Simulation ist dann die Ableitung von simulierten Lastsignalen aus sowohl dem Druck im Saugrohr wie auch aus der Winkelstellung der Drosselklappe möglich. Die simulierten Lastsignale dienen erfindungsgemäß zur Ermittlung des tatsächlich fehlerhaften Drucksensors.

Die oben genannte Aufgabe der Erfindung wird weiterhin durch das in Patentanspruch 6 beanspruchte Steuerungsgerät und durch das in Patentanspruch 13 beanspruchte Computerprogramm gelöst.

Die Vorteile des Steuerungsgerätes und des Computerprogramms entsprechen im wesentlichen den zuvor mit Bezug auf das beanspruchte Verfahren genannten Vorteilen.

Weitere vorteilhafte Ausgestaltungen des beanspruchten Verfahrens, des Steuerungsgerätes und des Computerprogramms sind Gegenstand der Unteransprüche.

Bevorzugte Ausführungsbeispiele der Erfindung werden nachfolgend anhand der beigefügten Figuren näher beschrieben, wobei:
- Fig. 1a: ein erfindungsgemäßes Verfahren zur Detektion fehlerhafter Drucksensoren bei einer Brennkraftmaschine und ein zur Realisierung des Verfahrens vorgesehenes erstes Logikmodul;
- Fig. 1b: ein erfindungsgemäßes Steuerungsgerät;
- Fig. 2: eine Weiterbildung des erfindungsgemäßen Verfahrens und ein zur Realisierung der Weiterbildung vorgesehenes zweites Logikmodul; und
- Fig. 3: eine bekannte Brennkraftmaschine mit variabler Ventilsteuerung und ein zugehöriges bekanntes Steuerungsgerät zur Ansteuerung der Ventile
veranschaulicht.

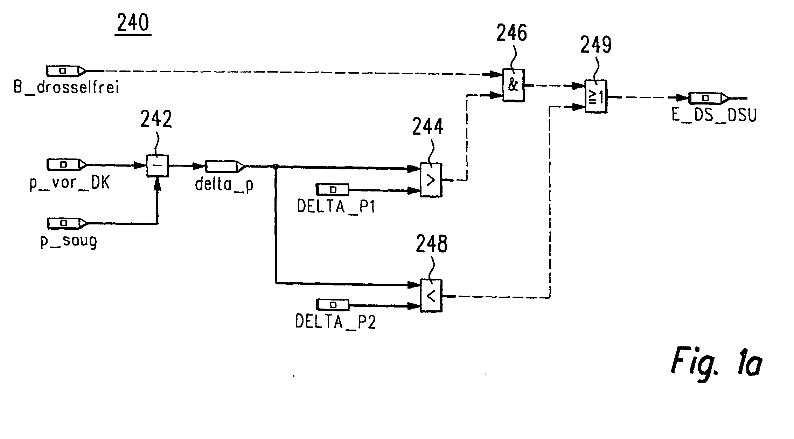

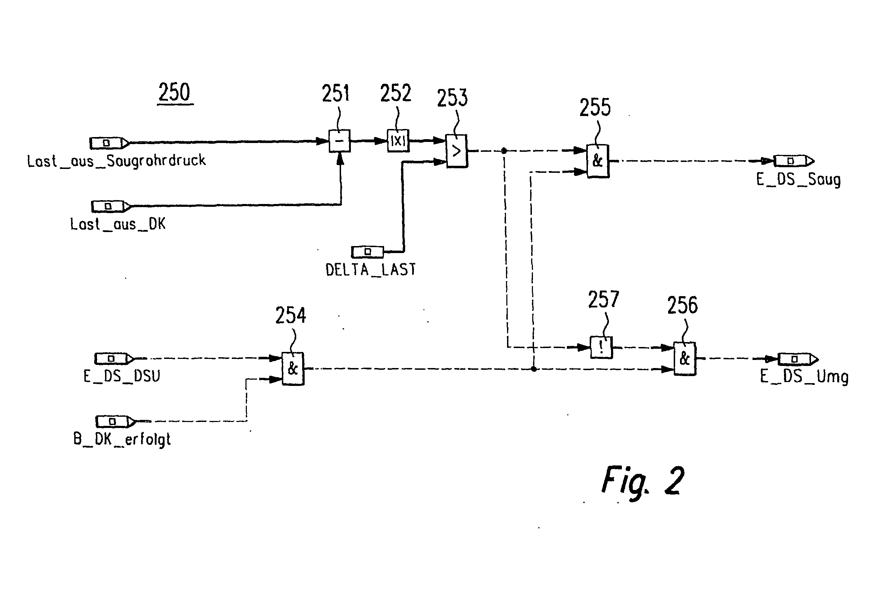

Fig. 1a veranschaulicht ein Verfahren zur Detektion, ob mindestens einer von zwei Drucksensoren, nämlich der Saugrohrdrucksensor und / oder der Umgebungsdrucksensor, bei einer Brennkraftmaschine mit variabler Ventilsteuerung gemäß Fig. 3 defekt ist oder nicht. Eine konkrete Unterscheidung, welcher der beiden Drucksensoren defekt ist, ermöglicht das Verfahren gemäß Fig. 1a noch nicht; eine solche Aussage kann erst mit Hilfe der weiter unten mit Bezugnahme auf Fig. 2 beschriebenen Weiterbildung des Verfahrens getroffen werden.

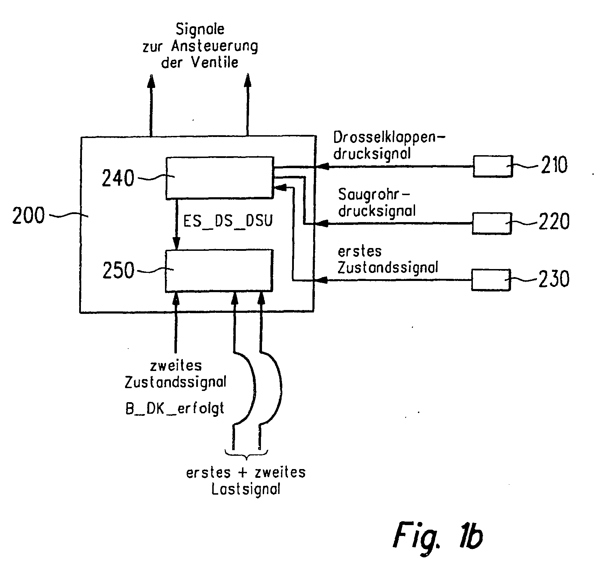

Die Veranschaulichung des Verfahrens erfolgt in Fig. 1a durch die Abbildung des funktionalen Aufbaus eines ersten erfindungsgemäßen Logikmoduls 240, welches vorzugsweise Bestandteil eines Steuerungsgerätes 200 zur Ansteuerung der Ventile der Brennkraftmaschine 100 ist, siehe Fig. 1b. Das erste Logikmodul 240 ermöglicht die Durchführung des beanspruchten Verfahrens. Nachfolgend wird der Aufbaus des ersten Logikmoduls 240 näher beschrieben; daraus erschließen sich zwangsläufig auch die einzelnen Schritte des beanspruchten Verfahrens.

Gemäß Fig. 1a empfängt das erste Logikmodul 240 sowohl ein Drosselklappendrucksignal, welches den Druck p_vor_DK vor der Drosselklappe repräsentiert und ein Saugrohrdrucksignal, welches den Druck p_saug im Saugrohr der Brennkraftmaschine repräsentiert; zur Erzeugung dieser Signale: siehe Fig. 3 und den zugehörigen Teil der Beschreibung. Weiterhin wird dem ersten Logikmodul 240 erfindungsgemäß ein erstes Zustandssignal, bereitgestellt von einem ersten Betriebszustandsdetektor 230, zugeführt, welches anzeigt, ob die Brennkraftmaschine in einem drosselfreien Betriebszustand betrieben wird. Alternativ kann das Zustandssignal auch von einem anderen Logikmodul innerhalb des Steuergeräts 200 erzeugt werden.

Das erste Logikmodul 240 enthält, wie in Fig. 1a gezeigt, eine erste Subtrahiereinheit 242 zum Bilden einer Druckdifferenz delta_p durch Subtrahieren des Saugrohrdrucksignals von dem Drosselklappendrucksignal. Diese Druckdifferenz wird einer ersten Vergleichereinheit 244 zugeführt, welche feststellt, ob die Druckdifferenz delta_p größer als ein erster Schwellenwert Delta_P1 ist. Ein erstes Und-Gatter 246 führt eine logische Und-Verknüpfung zwischen dem logischen Ausgangssignal der ersten Vergleichereinheit 244 und dem ersten Zustandssignal durch. Das Ausgangssignal dieses ersten Und-Gatters 246 macht eine erste Aussage darüber, ob mindestens einer der Drucksensoren 210, 220 fehlerhaft ist oder nicht; dies ist genau dann der Fall, wenn die Druckdifferenz delta_p tatsächlich größer als der erste Schwellenwert Delta_P1 ist und gleichzeitig drosselfreier Betrieb der Brennkraftmaschine 100, angezeigt durch das erste Zustandssignal, vorliegt. Dabei ist der erste Schwellenwert Delta_P1 vorzugsweise auf ungefähr Null eingestellt.

Unabhängig von dieser ersten Aussage umfasst das erste Logikmodul 240 eine zweite Vergleichereinheit 248 zum Feststellen, ob die Druckdifferenz delta_p kleiner als der zweite Schwellenwert Delta_P2, mit Delta_P2 vorzugsweise Null, ist. Wenn dies der Fall ist, ist eine zweite Aussage, unabhängig von der ersten Aussage möglich, dass einer der beiden Drucksensoren 210, 220 fehlerhaft arbeitet. Diese Aussage ist physikalisch darin begründet, dass der Druck im Saugrohr 120 nie größer sein kann als der Druck vor der Drosselklappe 122.

Das erste Logikmodul 240 umfasst weiterhin ein Oder-Gatter 249, um das Ausgangssignal des ersten Und-Gatters 246 und das Ausgangssignal der zweiten Vergleichereinheit 248 einer Oder-Verknüpfung zu unterziehen. Diese Oder-Verknüpfung dient zur Erzeugung eines ersten Fehlersignals E_DS_DSU, welches einen Fehler in einem der beiden Drucksensoren 210, 220 repräsentiert, wenn ein solcher Fehler entweder bereits am Ausgang des ersten Und-Gatters 246 oder bereits am Ausgang der zweiten Vergleichereinheit 248 oder an beiden Ausgängen festgestellt worden ist.

Fig. 2 veranschaulicht eine Weiterbildung des in Fig. 1 dargestellten Verfahrens, wobei diese Weiterbildung dazu dient, eine genaue Feststellung darüber zu ermöglichen, ob der Saugrohrdrucksensor oder der Umgebungsdrucksensor 210 defekt ist. Diese Weiterbildung ist in Form eines zweiten Logikmoduls 250 realisiert, das vorzugsweise ebenfalls dem Steuerungsgerät 200 zugeordnet ist, siehe Fig. 1b.

Gemäß Fig. 1b und 2 realisiert das zweite Logikmodul 250 die besagte Weiterbildung des Verfahrens durch logisches Verknüpfen des ersten Fehlersignals ES_DS_DSU, eines ersten Lastsignals Last_aus_Saugrohrdruck, welches die Last der Brennkraftmaschine abgeleitet aus dem Druck im Saugrohr repräsentiert, und eines zweiten Lastsignals Last_aus_DK, welches die Last der Brennkraftmaschine abgeleitet aus der Winkelstellung der Drosselklappe 122 repräsentiert.

Für die Realisierung der Weiterbildung des Verfahrens wird bei der Brennkraftmaschine 100 mit grundsätzlich variabler Ventilsteuerung ein Betriebszustand mit gedrosselter Laststeuerung simuliert. Dazu werden die Ventile 140 vorzugsweise von dem Steuerungsgerät 200 mit starren Steuerkanten angesteuert. Dieser spezielle Betriebszustand wird von einem zweiten Zustandssignal B_DK_erfolgt repräsentiert, welches dem zweiten Logikmodul 250 ebenfalls als Eingangsgröße zugeführt wird.

Das zweite Logikmodul 250 umfasst eine zweite Subtrahiereinheit 251 zum Bilden einer Lastdifferenz durch Subtrahieren des zweiten Lastsignals von dem ersten Lastsignal. Eine Betragsbildungseinheit 252 bildet den Betrag Lastdifferenz bevor dieser einer dritten Vergleichereinheit 253 zugeführt wird. Die dritte Vergleichereinheit 253 stellt fest, ob der Betrag der Lastdifferenz größer als ein dritter Schwellenwert Delta_Last ist.

Ein zweites Und-Gatter 254 führt eine Und-Verknüpfung durch zwischen dem ersten Fehlersignal E_DS_DSU und dem zweiten Zustandssignal B_DK_erfolgt. Das Ausgangssignal des zweiten Und-Gatters 254 wird zusammen mit dem Ausgangssignal der dritten Vergleichereinheit 253 einem dritten Und-Gatter 255 zugeführt, so dass das Ausgangssignal des dritten Und-Gatters 255 das Ergebnis der Und-Verknüpfung der genannten zugeführten Signale darstellt. Anders ausgedrückt: das Ausgangssignal des dritten Und-Gatters 255 repräsentiert ein zweites Fehlersignal E_DS_Saug, d.h. es zeigt ggf. eine Fehlerhaftigkeit des Saugrohrdrucksensors 220 an. Eine solche Fehlerhaftigkeit liegt dann vor, wenn der Betrag der Differenz zwischen der aus dem Druck im Saugrohr abgeleiteten Last der Brennkraftmaschine und der aus dem Winkel der Drosselklappe abgeleiteten Last größer als der dritte Schwellenwert delta_Last ist und wenn außerdem gleichzeitig bei dem oben unter Bezugnahme auf Fig. 1a beschriebenen Vorverfahren bereits grundsätzlich das Vorliegen eines Fehlers in mindestens einem der Drucksensoren, Umgebungsdrucksensor 210 oder Saugrohrdrucksensor 220, festgestellt wurde und bei der Brennkraftmaschine 100 ein Betrieb mit gedrosselter Laststeuerung simuliert wurde. Die Schlussfolgerung des defekten Saugrohrdrucksensors ist zulässig, da das Signal Last_aus_DK durch andere Diagnosen zuverlässig überwacht wird und daher korrekt ist.

Weiterhin umfasst das zweite Logikmodul 250 ein viertes Und-Gatter 256 zum Durchführen einer Und-Verknüpfung zwischen dem durch einen Inverter 257 invertierten Ausgangssignal der dritten Vergleichereinheit 253 und dem Ausgangssignal des zweiten Und-Gatters 254. Das Ausgangssignal des vierten Und-Gatters 256 repräsentiert ein drittes Fehlersignal E_DS_Umg, welches ggf. einen Fehler in dem Umgebungsdrucksensor 210 anzeigt. Ein solcher Fehler liegt vor, wenn der Betrag der Differenz zwischen der aus dem Druck im Saugrohr abgeleiteten Last der Brennkraftmaschine und der aus der Winkelstellung der Drosselklappe abgeleiteten Last kleiner oder gleich dem dritten Schwellenwert Delta_Last ist und gleichzeitig bei dem oben unter Bezugnahme auf Fig. 1 beschriebenen Vorverfahren bereits grundsätzlich ein Fehler in mindestens einem der Drucksensoren 210, 220 festgestellt wurde und bei der Brennkraftmaschine ein Betrieb mit gedrosselter Laststeuerung simuliert wurde.

Sowohl das erste wie auch das zweite Logikmodul können jeweils, unabhängig voneinander, als Hardwareschaltung realisiert sein.

Von besonderer Bedeutung ist jedoch die Realisierung des erfindungsgemäßen Verfahrens und damit des ersten und/oder zweiten Logikmoduls 240, 250 in der Form eines Computerprogramms. Dabei ist das Computerprogramm auf einem Rechengerät, insbesondere einem Mikroprozessor in dem Steuerungsgerät 200, ablauffähig und zur Ausführung des erfindungsgemäßen Verfahrens geeignet. In diesem Fall wird also die Erfindung durch das Computerprogramm realisiert, so dass dieses Computerprogramm in gleicher Weise die Erfindung darstellt, wie das Verfahren, zu dessen Ausführung das Computerprogramm geeignet ist. Das Computerprogramm ist vorzugsweise auf einem Speicherelement abgespeichert. Als Speicherelement kann insbesondere ein elektrisches Speichermedium zur Anwendung kommen, beispielsweise ein Random-Access-Memory RAM, ein Read-Only-Memory ROM oder ein Flash-Memory.

## Patentansprüche

1. Verfahren zur Detektion eines fehlerhaften Saugrohrdrucksensors (220) und/oder eines fehlerhaften Umgebungsdrucksensors (210) bei einer Brennkraftmaschine (100) mit variabler Ventilsteuerung, umfassend die Schritte:
- Ermitteln des Druckes p_vor_DK vor der Drosselklappe (122) der Brennkraftmaschine (100) aus dem gemessenem Umsgebungsdruck;
- Ermitteln des Druckes p_saug im Saugrohr (120) der Brennkraftmaschine (100) aus dem Saugrohrdrucksensorsignal;
- Bilden einer Druckdifferenz delta_p durch Subtrahieren des Druckes im Saugrohr (120) von dem Druck vor der Drosselklappe (122);
- Vergleichen der Druckdifferenz delta_p mit einem ersten Schwellenwert Delta_P1 bei drosselfreiem Betrieb der Brennkraftmaschine (100) und mit einem zweiten Schwellenwert Delta P2 bei gedrosseltem oder ungedrosseltem Betrieb der Brennkraftmaschine (100); und
- Detektieren, dass mindestens einer der beiden Drucksensoren fehlerhaft ist, wenn: delta_p > Delta_P1 und/ oder delta_p < Delta_P2.

2. Verfahren nach Anspruch 1, **dadurch gekennzeichnet, dass** der erste und/oder der zweite Schwellenwert auf einen Wert von ungefähr Null eingestellt wird.

3. Verfahren nach Anspruch 1 oder 2, **dadurch gekennzeichnet, dass** das Verfahren nach der Detektion, dass mindestens einer der beiden Drucksensoren fehlerhaft ist, weiterhin folgende Schritte umfasst:
- Einstellen der Brennkraftmaschine (100) in einen Betriebszustand, der einen Betrieb mit starren Steuerzeiten und gedrosselter Laststeuerung simuliert;
- Ermitteln der Last der Brennkraftmaschine (100) aus dem Druck in dem Saugrohr (120);
- Ermitteln der Last der Brennkraftmaschine (100) aus der Winkelstellung der Drosselklappe (122);
- Bilden der Differenz der beiden Lasten durch Subtrahieren der aus der Winkelstellung der Drosselklappe (122) abgeleiteten Last von der aus dem Saugrohrdruck abgeleiteten Last;
- Vergleichen der Lastdifferenz mit einem dritten Schwellenwert Delta_Last;
- Detektieren, dass der Saugdrucksensor fehlerhaft ist, wenn der Betrag der Lastdifferenz größer als der dritte Schwellenwert Delta_Last ist; oder
- Detektieren, dass der Umgebungsdrucksensor (210) fehlerhaft ist, wenn die Lastdifferenz kleiner gleich dem dritten Schwellenwert ist.

4. Verfahren nach Anspruch 3, **dadurch gekennzeichnet, dass** der dritte Schwellenwert zumindest näherungsweise auf Null eingestellt ist.

5. Verfahren nach Anspruch 3 oder 4, **dadurch gekennzeichnet, dass** das Lastsignal aus der Drosselklappe (122) abgeleitet aus der Winkelstellung der Drosselklappe (122) ersetzt wird durch ein Lastsignal, das abgeleitet wurde aus dem Messsignal eines Heißfilmluftmassenmessers.

6. Steuerungsgerät (200) zur Ansteuerung einer Brennkraftmaschine (100) mit variabler Ventilsteuerung, umfassend:
- einen Saugrohrdrucksensor (220) zum Bereitstellen eines Saugrohrdrucksignals, welches den Druck p_saug im Saugrohr (120) der Brennkraftmaschine (100) repräsentiert;
- einen Umgebungsdrucksensor (210) zum Bereistellen eines Drosselklappendrucksignals, welches den Druck vor der Drosselklappe p_vor_DK repräsentiert;
- einen ersten Betriebszustandsdetektor (230) zum Bereitstellen eines ersten Zustandssignals, welches den drosselfreien Betriebszustand der Brennkraftmaschine (100) repräsentiert; und
- ein erstes Logikmodul (240) zum Detektieren, ob mindestens einer der beiden Drucksensoren (210, 220) fehlerhaft ist durch logisches Verknüpfen des Saugrohrdrucksignals, des Drosselklappendrucksignals und des ersten Zustandssignals gemäß dem in den Patentansprüchen 1 oder 2 beanspruchten Verfahren.

7. Steuerungsgerät (200) nach Anspruch 6, **dadurch gekennzeichnet, dass** das erste Logikmodul (240) aufweist:
- eine Subtrahiereinheit (242) zum Bilden einer Druckdifferenz delta_p durch Subtrahieren des Saugrohrdrucksignals von dem Drosselklappendrucksignal;
- eine erste Vergleichereinheit (244) zum Feststellen, ob die Druckdifferenz delta_p größer als der erste Schwellenwert Delta_P1 ist;
- eine zweite Vergleichereinheit (248) zum Feststellen, ob die Druckdifferenz delta_p kleiner als der zweite Schwellenwert Delta_P2 ist; und
- ein erstes Und_Gatter (246) zum Und-Verknüpfen des logischen Ausgangssignals der ersten Vergleichereinheit (244) mit dem ersten Zustandssignal.

8. Steuerungsgerät (200) nach Anspruch 7, **dadurch gekennzeichnet, dass** das erste Logikmodul (240) weiterhin ein Oder-Gatter (249) aufweist zum Ausgeben eines ersten Fehlersignals ES_DS_DSU, welches einen Fehler in mindestens einem der beiden Drucksensoren (210, 220) repräsentiert, durch Oder-Verknüpfen des Ausgangssignal des ersten Und-Gatters (246) und des Ausgangssignals der zweiten Vergleichereinheit (248).

9. Steuerungsgerät (200) nach einem der Ansprüche 6 bis 8, **dadurch gekennzeichnet, dass** das erste Logikmodul (240) als Hardwareschaltung realisiert ist.

10. Steuerungsgerät (200) nach Anspruch 8 oder 9, **dadurch gekennzeichnet, dass** das Steuerungsgerät (200) ein zweites Logikmodul (250) aufweist zum Festellen, ob der Saugrohrdrucksensor (220) oder der Umgebungsdrucksensor (210) fehlerhaft ist durch logisches Verknüpfen des ersten Fehlersignals ES_DS_DSU, eines zweiten Zustandssignals, welches anzeigt, ob die Brennkraftmaschine (100) in einen Betriebszustand mit starren Steuerkanten und gedrosselter Laststeuerung eingestellt ist, eines ersten Lastsignals, welches die Last der Brennkraftmaschine (100) abgeleitet aus dem Druck im Saugrohr (120) repräsentiert, und eines zweiten Lastsignals, welches die Last der Brennkraftmaschine (100) abgeleitet aus der Winkelstellung der Drosselklappe (122) repräsentiert.

11. Steuerungsgerät (200) nach Anspruch 10, **dadurch gekennzeichnet, dass** das zweite Logikmodul (250) aufweist:
- eine zweite Subtrahiereinheit (251) zum Bilden einer Lastdifferenz durch Subtrahieren des zweiten Lastsignals von dem ersten Lastsignal;
- eine Betragsbildungseinheit (252) zum Bilden des Betrags der Lastdifferenz;
- eine dritte Vergleichereinheit (253) zum Feststellen, ob der Betrag der Lastdifferenz größer als ein dritter Schwellenwert Delta_Last ist;
- ein zweites Und-Gatter (254) zum Und-Verknüpfen des ersten Fehlersignals mit dem zweiten Zustandssignal;
- ein drittes Und-Gatter (255) zum Bilden eines zweiten Fehlersignals E_DS_Saug, welches gegebenenfalls einen Fehler des Saugrohrdrucksensors (220) repräsentiert, durch Und-Verknüpfen des Ausgangssignals der dritten Vergleichereinheit (253) mit dem Ausgangssignal des zweiten Und-Gatters (254);
- einen Inverter (257) zum Invertieren des Ausgangssignals der dritten Vergleichereinheit (253); und
- ein viertes Und-Gatter (256) zum Bilden eines dritten Fehlersignals E_DS_Umg, welches gegebenenfalls einen Fehler des Umgebungsdrucksensors (210) repräsentiert, durch Und-Verknüpfen des invertierten Ausgangssignals der dritten Vergleichereinheit (253) mit dem Ausgangssignal des zweiten Und-Gatters (254).

12. Steuerungsgerät (200) nach einem der Ansprüche 10 oder 11, **dadurch gekennzeichnet, dass** das zweite Logikmodul (250) als Hardwareschaltung realisiert ist.

13. Computerprogramm zur Ausführung auf einem Rechengerät, insbesondere einem Mikroprozessor, eines Steuerungsgerätes zur Ansteuerung einer Brennkraftmaschine (100) mit variabler Ventilsteuerung, **dadurch gekennzeichnet, dass** das Computerprogramm zur Ausführung eines Verfahrens nach einem der Ansprüche 1 bis 5 geeignet ist, wenn es auf dem Rechengerät abläuft.

14. Computerprogramm nach Anspruch 13, **dadurch gekennzeichnet, dass** das Computerprogramm auf einem Speicherelement, insbesondere auf einer Diskette, einer CD (Compact Disk) oder einem EPROM (Electronically Programmable Read-Only-Memory) gespeichert ist.

## Claims

1. Method for detecting a defective intake manifold pressure sensor (220) and/or a defective ambient pressure sensor (210) in an internal combustion engine (100) with variable valve control, comprising the steps:
- determination of the pressure p_vor_DK upstream of the throttle valve (122) of the internal combustion engine (100) from the measured ambient pressure;
- determination of the pressure p_saug in the intake manifold (120) of the internal combustion engine (100) from the intake manifold pressure sensor signal;
- formation of a difference in pressure delta_p by subtracting the pressure in the intake manifold (120) from the pressure upstream of the throttle valve (122);
- comparison of the pressure difference delta_p with a first threshold value Delta_P1 during throttle-free operation of the internal combustion engine (100) and with a second threshold value Delta_P2 during throttled or unthrottled operation of the internal combustion engine (100); and
- detection that at least one of the two pressure sensors is defective if: delta_p > Delta_P1 and/or delta_p < Delta_P2.

2. Method according to Claim 1, **characterized in that** the first and/or the second threshold value are/is set to a value of approximately zero.

3. Method according to Claim 1 or 2, **characterized in that** the method after the detection that at least one of the two pressure sensors is defective also comprises the following steps:
- setting of the internal combustion engine (100) to an operating state which simulates operation with rigid control times and throttled load control;
- determination of the load of the internal combustion engine (100) from the pressure in the intake manifold (120);
- determination of the load of the internal combustion engine (100) from the angular setting of the throttle valve (122);
- formation of the difference between the two loads by subtracting the load derived from the angular setting of the throttle valve (122) from the load derived from the intake manifold pressure;
- comparison of the difference in load with a third threshold value Delta_Last;
- detection that the intake manifold sensor is defective if the absolute value of the difference in load is greater than the third threshold value Delta_Last; or
- detection that the ambient pressure sensor (210) is defective if the difference in load is less than or equal to the third threshold value.

4. Method according to Claim 3, **characterized in that** the third threshold value is set at least approximately to zero.

5. Method according to Claim 3 or 4, **characterized in that** the load signal from the throttle valve (122) which is derived from the angular setting of the throttle valve (122) is replaced by a load signal which has been derived from the measuring signal of a hot-film air mass flow rate meter.

6. Control device (200) for actuating an internal combustion engine (100) with a variable valve control, comprising:
- an intake manifold pressure sensor (220) for making available an intake manifold pressure signal which represents the pressure p_saug in the intake manifold (120) of the internal combustion engine (100);
- an ambient pressure sensor (210) for making available a throttle valve pressure signal which represents the pressure upstream of the throttle valve p_vor_DK;
- a first operating state detector (230) for making available a first state signal which represents the throttle-free operating state of the internal combustion engine (100); and
- a first logic module (240) for detecting whether at least one of the two pressure sensors (210, 220) is defective by logically linking the intake manifold pressure signal, the throttle valve pressure signal and the first state signal according to the method claimed in patent claims 1 or 2.

7. Control device (200) according to Claim 6,
**characterized in that** the first logic module (240) has:
- a subtractor unit (242) for forming a pressure difference delta_p by subtracting the intake manifold pressure signal from the throttle valve pressure signal;
- a first comparison unit (244) for determining whether the difference in pressure delta_p is greater than the first threshold value Delta_P1;
- a second comparison unit (248) for determining whether the difference in pressure delta_p is smaller than the second threshold value Delta_P2; and
- a first AND_Gate (246) for performing an AND logic combination of the logic output signal of the first comparison unit (244) with the first state signal.

8. Control device (200) according to Claim 7, **characterized in that** the first logic module (240) also has an OR gate (249) for outputting a first fault signal ES_DS_DSU which represents a fault in at least one of the two pressure sensors (210, 220), by performing an OR logic combination of the output signal of the first AND gate (246) with the output signal of the second comparison unit (248).

9. Control device (200) according to one of Claims 6 to 8, **characterized in that** the first logic module (240) is implemented as a hardware circuit.

10. Control device (200) according to Claim 8 or 9, **characterized in that** the control device (200) has a second logic module (250) for determining whether the intake manifold pressure sensor (220) or the ambient pressure sensor (210) is defective by performing a logic combination of the first fault signal ES_DS_DSU, of a second state signal which indicates whether the internal combustion engine (100) is set to an operating state with rigid control edges and throttled load control, of a first load signal which represents the load of the internal combustion engine (100) derived from the pressure in the intake manifold (120), and of a second load signal which represents the load of the internal combustion engine (100) derived from the angular setting of the throttle valve (122).

11. Control device (200) according to Claim 10,
**characterized in that** the second logic module (250) has:
- a second subtraction unit (251) for forming a difference in load by subtracting the second load signal from the first load signal;
- an absolute-value-forming unit (252) for forming the absolute value of the difference in load;
- a third comparison unit (253) for determining whether the absolute value of the difference in load is greater than a third threshold value Delta_Last;
- a second AND gate (254) for performing an AND logic combination of the first fault signal with the second state signal;
- a third AND gate (255) for performing a second fault signal E_DS_Saug which, if appropriate, represents a fault of the intake manifold pressure sensor (220) by performing an AND logic combination of the output signal of the third comparison unit (253) with the output signal of the second AND gate (254);
- an inverter (257) for inverting the output signal of the third comparison unit (253); and
- a fourth AND gate (256) for forming a third fault signal E_DS_Umg which, if appropriate, represents a fault of the ambient pressure sensor (210), by performing an AND logic combination of the inverted output signal of the third comparison unit (253) with the output signal of the second AND gate (254).

12. Control device (200) according to one of Claims 10 or 11, **characterized in that** the second logic module (250) is implemented as a hardware circuit.

13. Computer program for execution on a computing unit, in particular a microprocessor, a control device for actuating an internal combustion engine (100) with variable valve control, **characterized in that** the computer program is suitable for carrying out a method according to one of Claims 1 to 5 when it runs on the computing device.

14. Computer program according to Claim 13, **characterized in that** the computer program is stored on a memory element, in particular on a diskette, a CD (compact disc) or an EPROM (Electronically Programmable Read-Only-Memory).

## Revendications

1. Procédé pour détecter un pressostat de pipe d'aspiration (220) défectueux et/ou un pressostat d'environnement (210) défectueux dans un moteur à combustion (100) à commande variable des soupapes, comportant les étapes de :
- détermination de la pression p_vor_DK devant le papillon (122) du moteur à combustion (100) à partir de la pression environnante mesurée ;
- détermination de la pression p_saug dans la pipe d'aspiration (120) du moteur à combustion (100) à partir du signal du pressostat de pipe d'aspiration ;
- formation d'une différence de pression delta_p en soustrayant la pression dans la pipe d'aspiration (120) de la pression avant le papillon (122) ;
- comparaison de la différence de pression delta_p avec une première valeur de seuil Delta_P1 en fonctionnement du moteur à combustion (100) sans papillon et avec une deuxième valeur de seuil Delta_P2 en fonctionnement du moteur à combustion (100) avec le papillon fermé ou avec le papillon ouvert ; et
- détection de la défectuosité d'au moins un des deux pressostats lorsque ;
delta_p > Delta_P1 et/ou delta_p < Delta_P2.

2. Procédé selon la revendication 1,
**caractérisé en ce que** la première et/ou la deuxième valeur de seuil est réglée à une valeur à peu près nulle.

3. Procédé selon la revendication 1 ou 2,
**caractérisé en ce que** le procédé, après la détection de la défectuosité d'au moins un des deux pressostats, comporte en outre les étapes suivantes:
- réglage du moteur à combustion (100) dans un état de fonctionnement simulant un fonctionnement avec des temps de commande rigides et une commande de la charge réduite ;
- détermination de la charge du moteur à combustion (100) à partir de la pression dans la pipe d'aspiration (120) ;
- détermination de la charge du moteur à combustion (100) à partir de la position angulaire du papillon (122) ;
- formation de la différence des deux charges en soustrayant la charge déduite de la position angulaire du papillon (122) de la charge déduite de la pipe d'aspiration ;
- comparaison de la différence de charge avec une troisième valeur de seuil Delta_Last ;
- détection de la défectuosité du pressostat de pipe d'aspiration lorsque le niveau de la différence de charge est supérieur à la troisième valeur de seuil Delta_Last ; ou
- détection de la défectuosité du pressostat d'environnement (210) lorsque la différence de charge est inférieure ou égale à la troisième valeur de seuil.

4. Procédé selon la revendication 3,
**caractérisé en ce que** la troisième valeur de seuil est réglée au moins approximativement à une valeur nulle.

5. Procédé selon la revendication 3 ou 4,
**caractérisé en ce que** le signal de charge du papillon (122) déduit de la position angulaire du papillon (122) est remplacé par un signal de charge déduit du signal de mesure d'un dispositif de mesure de la masse de l'air par film chaud.

6. Appareil de commande (200) pour la commande d'un moteur à combustion (100) à commande variable des soupapes, comprenant :
- un pressostat de pipe d'aspiration (220) pour fournir un signal de pression dans la pipe d'aspiration représentant la pression p_saug dans la pipe d'aspiration (120) du moteur à combustion (100) ;
- un pressostat d'environnement (210) pour fournir un signal de pression du papillon représentant la pression p_vor_DK devant le papillon ;
- un premier détecteur de l'état de fonctionnement (230) pour fournir un premier signal d'état représentant l'état de fonctionnement sans papillon du moteur à combustion (100) ; et
- un premier module logique (240) pour détecter la défectuosité d'au moins un des deux pressostats (210, 220) par combinaison logique du signal de la pipe d'aspiration, du signal de pression du papillon et du premier signal d'état selon le procédé revendiqué dans les revendications 1 ou 2 du brevet.

7. Appareil de commande (200) selon la revendication 6, **caractérisé en ce que** le premier module logique (240) comporte :
- une unité de soustraction (242) pour former une différence de pression delta_p en soustrayant le signal de la pression dans la pipe d'aspiration du signal de la pression du papillon ;
- une première unité de comparaison (244) pour constater si la différence de pression delta_p est supérieure à la première valeur de seuil Delta_P1;
- une deuxième unité de comparaison (248) pour constater si la différence de pression delta_p est inférieure à la deuxième valeur de seuil Delta_P2 ; et
- une première porte ET (246) pour assurer la fonction combinatoire ET du signal logique de sortie de la première unité de comparaison (244) avec le premier signal d'état.

8. Appareil de commande (200) selon la revendication 7, **caractérisé en ce que** le premier module logique (240) comporte de plus une porte OU (249) pour fournir un premier signal de défaut ES_DS_DSU représentant une défectuosité dans au moins un des deux pressostats (210, 220) par combinaison logique OU du signal de sortie de la première porte ET (246) et du signal de sortie de la deuxième unité de comparaison (248).

9. Appareil de commande (200) selon une des revendications 6 à 8, **caractérisé en ce que** le premier module logique (240) est réalisé sous la forme d'un circuit matériel.

10. Appareil de commande (200) selon la revendication 8 ou 9, **caractérisé en ce que** l'appareil de commande (200) comporte un deuxième module logique (250) pour constater si le pressostat de pipe d'aspiration (220) ou le pressostat d'environnement (210) est défectueux au moyen de la combinaison logique du premier signal de défaut ES_DS_DSU, d'un deuxième signal d'état indiquant si le moteur à combustion (100) est réglé dans un état de fonctionnement avec des fronts de commande rigides et une commande de la charge réduite, d'un premier signal de charge représentant la charge du moteur à combustion (100) déduite de la pression dans la pipe d'aspiration (120), et d'un deuxième signal de charge représentant la charge du moteur à combustion (100) déduite de la position angulaire du papillon (122).

11. Appareil de commande (200) selon la revendication 10, **caractérisé en ce que** le deuxième module logique (250) comporte:
- une deuxième unité de soustraction (251) pour former une différence de charge en soustrayant le deuxième signal de charge du premier signal de charge ;
- une unité de formation du niveau (252) pour former le niveau de la différence de charge ;
- une troisième unité de comparaison (253) pour constater si le niveau de la différence de charge est supérieur à une troisième valeur de seuil Delta_Last ;
- une deuxième porte ET (254) pour la fonction combinatoire ET du premier signal de défaut avec le deuxième signal d'état.
- une troisième porte ET (255) pour former un deuxième signal de défaut E_DS_Saug, représentant le cas échéant un défaut du pressostat de pipe d'aspiration (220), par combinaison ET du signal de sortie de la troisième unité de comparaison (253) avec le signal de sortie de la deuxième porte ET (254) ;
- un inverseur (257) pour inverser le signal de sortie de la troisième unité de comparaison (253) ; et
- une quatrième porte ET (256) pour former un troisième signal de défaut E_DS_Umg, représentant le cas échéant un défaut du pressostat d'environnement (210), par combinaison ET du signal de sortie inversé de la troisième unité de comparaison (253) avec le signal de sortie de la deuxième porte ET (254).

12. Appareil de commande (200) selon une des revendications 10 ou 11, **caractérisé en ce que** le deuxième module logique (250) est réalisé sous la forme d'un circuit matériel.

13. Programme d'ordinateur pour l'exécution sur un calculateur, notamment un microprocesseur, d'un appareil de commande pour le pilotage d'un moteur à combustion (100) à commande variable des soupapes, **caractérisé en ce que** le programme d'ordinateur pour l'exécution d'un procédé est approprié à une des revendications 1 à 5 lorsqu'il s'exécute sur le calculateur.

14. Programme d'ordinateur selon la revendication 13, **caractérisé en ce que** le programme d'ordinateur est stocké sur un élément de stockage, notamment sur une disquette, un CD (Compact Disk) ou une EPROM (Electronically Programmable Read-Only-Memory).
